# EUROPEAN PATENT APPLICATION

(11) **EP 2 489 279 A1**
(43) Date of publication of application: **22.08.2012**
(21) Application number: 12168415.3
(22) Date of filing: 22.09.2008
(51) Int. Cl.: A23L 1/00, A21D 10/00

(54) **Crisp, filled foods and methods related thereto**

(30) Priority: 20.09.2007 US 973872 P
(62) Divisional of application: 08832589.9
(71) Applicant: Kellogg Company, Battle Creek, MI 49016-3599 (US)
(72) Inventor: Ortiz, Deirdre, Battle Creek, 49014 (US); Treece, Thomas, Z, Almonte Springs, FL Florida 32701 (US)
(74) Representative: Monzón de la Flor, Luis Miguel

(57) **Abstract**

The present invention provides crisp filled foods, intermediates, and processes for making them. Particularly, the present invention provides crisp crackers, pretzels, breadsticks, cookies and the like with creamy and lubricious filling. Efficient processes are also provided for making such crisp filled foods, wherein dough is baked, fried or similarly heated in the presence of a specially-formulated powder so as to ultimately result in a lubricious filling and a crisp exterior. Superior intermediates and end products are therefore also provided. The foods surprisingly retain their crisp exterior and lubricious interior for an extended time span when packaged and stored under commercial conditions.

## Description

### CROSS REFERENCE TO RELATED APPLICATION

The present application claims priority to United States Provisional Patent Application Number 60/973,872, filed September 20,2007.

### FIELD OF THE INVENTION

The present invention provides crisp filled foods, intermediates, and processes for making them. Particularly, the present invention provides crisp crackers, pretzels, breadsticks, cookies and the like with creamy and lubricious filling. Efficient processes are also provided for making such crisp filled foods, wherein dough is baked, fried or similarly heated in the presence of a specially-formulated powder so as to ultimately result in a lubricious filling and a crisp exterior. Superior intermediates and end products are therefore also provided. The foods surprisingly retain their crisp exterior and lubricious interior for an extended time span when packaged and stored under commercial conditions.

### BACKGROUND OF THE INVENTION

Filled dough products, such as hand-held pies with moist fruit, melted cheese, or gravy fillings, have been made for centuries. Calzones, fried fruit pies, and Hot Pockets^{®} frozen sandwiches are recent examples of these types of products. These fillings are moisture-rich and have short shelf lives as a result.

Snack crackers, pretzels, and cookies filled with cheese, peanut butter or flavored frostings are currently available to the consumer. Combos^{®} snacks, peanut butter crackers, cheese crackers and Oreos^{®} cookies are examples of these types of products. While these products have relatively long shelf lives, the crust remains crisp by virtue of a fat-based filling system. Such fillings typically are from 40 to 80% fat.

Kellogg's Pop-Tarts^{®} and similar hand-held toaster pastries have a long shelf life and low-fat fillings. The exterior is not crisp, however. These products arc made using low water activity filling that is deposited on a moisture-resistant dough. The filling is paste-like when deposited on the dough, and the finished product has a typical water activity of less than 0.7. Because the dough has less moisture than the filling, the dough/filling system equilibrates so as to result in soft exterior and lubricious filling (e.g.. Fig Newtons^{®}, Nutrigrain^{®} bars, etc.). Despite the fact that these products are made using a dough surrounding a low-fat filling, the exterior of these types of products are not crisp like a pretzel, cracker, hard breadstick or hard cookie due to moisture transfer to the crust during equilibration.

It is important to emphasize that the textural and structural features of filled food products are as desirable to consumers as the flavor, and crisp filled foods have become very popular. Previous attempts at stabilization of crust and filling properties have relied on either preventing the transfer of moisture in the direction of the crust, or encouraging retention of moisture in the filling. If the crust absorbs moisture from the filling, the outer layer becomes soggy, stale or otherwise unacceptable, and the filling may become lumpy, crystallize or otherwise lose its appeal.

The following patents are examples of preventing moisture transfer by coating the crust with oils or other hydrophobic compounds, to form a barrier to a moist filling: U.S. Patent 4,401,681; U.S. Patent 4,853,236; U.S. Patent 5,500,234; U.S. Patent 4,596,714.

The following patents are examples of preventing moisture transfer by modifying the filling: U.S. Patent 3,656,967; U.S. Patent 4,562,080; U.S. Patent 4,774,095; U.S. Patent 6,280,782; U.S. Patent 5,405,625; and U.S. Patent 5,362,508.

Processes for making filled products include baking a dough so as to form a crust and subsequently depositing a creamy filling, or depositing a creamy and bake-stable filling on a dough prior to baking. Examples of such processes have been disclosed generally in U.S. Patent 4,275,fi47; U.S. Patent 4,518,617; and U.S. Patent 4,958,556.

Other sweet fillings and savory filling formulations have been disclosed in the past: U.S. Patent 4,772,482; U.S. Patent Publication 2002/106; U.S. Patent 6,322,829; and U.S. Patent Publication 2002/155,198.

For crisp filled crackers, pretzels, hard breadsticks, hard cookies and the like, the approach to date is to bake dough until crisp, and subsequently layer or fill with a high-fat filling. These processes are limited in efficiency and in flexibility of product profile, it is known in the state of the art different products and methods related with the object of the invention such as:
- US 5529801 A which discloses a composite food subsystem that provides a sweet or savory-flavored thermostable filling having an ultra-low water activity. The thermostable filling is, also, thixotropic or "shear thinning". The filling includes an edible hydrophilic liquid phase.
- EP 0750843 A2 which discloses a low-fat, reduced-fat, or fat-free cheese-flavored filling for use in snacks, including, for example, crackers, wafers, or other shaped flour-based snack foods, is provided. The reduced-fat cheese-flavored fillings allow for snacks having texture, flavor, and mouthfeel similar to conventional snack products with significantly reduced levels of fat.
- US 2004126464 A1 which discloses a creamy product with a lubricious mouthfeel is bake-stable and suitable as a filler or topping for baked goods. In a preferred form, it comprises: at least 30% by weight of a discontinuous fat portion; at least 20% of a continuous aqueous liquid component for providing sweetness and stability, comprising liquid sugar and liquid polyol, wherein the combined weight of liquid sugars and liquid polyols amounts to from 40 to 95% solids by weight of the aqueous liquid component, and the continuous aqueous liquid component preferably contains less than 20% water.

As a result, there is a need in the food industry for improved compositions and processes in the field of crispy filled food products, particularly those with a crisp outer layer and a creamy and lubricious inner filling.

### SUMMARY OF THE INVENTION

The present invention provides ready-to-eat, crisp filled food, comprising: crisp crust having a lubricious filling, wherein the filling has less than 30% fat and the food has an overall water activity less than 0.6. Preferably, the overall water activity is in the range of 0.2-0.6, more preferably 0.40-0.6. Also preferable are those compositions wherein the filling has less than 20% fat, more preferably less than 10% fat, most preferably less than 5% fat.

In one embodiment, the crust substantially encloses the filling. In another embodiment, the filling comprises 50-95% hydrated crystalline fructose, preferably 70-90% hydrated crystalline fructose, more preferably in combination with 2-10% modified corn starch and/or 2-12% corn syrup solids. In another embodiment, the crisp filled food comprises a filling having 20-50% hydrated powdered whey, preferably with 10-25% cheese powder. Also provided are intermediates, or ready-to-bake dough, which encloses powdered ingredients, wherein the powdered ingredients comprise 50-95% crystalline fructose and/or 20-50% powdered whey.

Also provided are methods to make a ready-to-eat, filled food, comprising: heating dough with powdered ingredients enclosed, so as to crisp the dough, and transform the powdered ingredients into lubricious filling, wherein the powdered ingredients comprise 50-95% crystalline fructose, preferably 70-90% crystalline fructose, more preferably combined with 2-10% modified corn starch and/or 2-12% corn syrup solids.

Also provided are methods to make ready-to-eat, filled food, comprising: heating dough with powdered ingredients enclosed, so as to crisp the dough and transform the powdered ingredients into lubricious filling, wherein the powdered ingredients comprise 20-50% powdered whey, preferably 30-40% powdered whey and/or powdered sweet whey, more preferably in combination with cheese powder.

Also provided are methods to make a ready-to-eat, filled food, comprising: heating dough with powdered ingredients enclosed, so as to crisp the dough and transform the powdered ingredients into lubricious filling, wherein the powdered ingredients comprise at least 20% powdered hygroscopic ingredients, preferably those wherein the powdered hygroscopic ingredient is selected from the group consisting of: crystalline sugar; powdered protein; powdered sugar alcohol; and dry salt.

Products made by these methods are also provided.

The ready-to-eat filled crackers are surprising shelf stable, with very little post-baking moisture redistribution.

In this disclosure, the words "dough" and "crust" have the meanings generally understood by food scientists, but also include slices of whole foods, compressed pieces of whole foods, and the like. For example, slices of potato, turnip, carrot, apple, pumpkin, zucchini, summer squash, banana, apricot, plum, steak, pork, chicken, etc., are all useful as the exterior of the present food items, so long as they are able to both emit moisture and crisp during heating (baking, frying, etc.). Commingled pastes that would otherwise not widely be considered a dough can also function as the exterior, such a paste made from minced fruits, nuts, and optionally bound by flour and pressed into a sheet. Those in the art know how to optimize moisture emission in these foods; some foods must be mechanically or chemically damaged so that the skin or internal structure allows moisture loss upon heating.

These and other features and advantages of this invention will become more apparent to those skilled in the art from the definitions, drawings, detailed description and examples provided herein.

Throughout the specification and claims, percentages and ratios are by weight and temperatures are in degrees Fahrenheit, unless otherwise indicated.

### DETAILED DESCRIPTION

The present invention provides ready-to-eat foods that have the surprising quality of a lubricious filling inside a crisp hull, crust, layers or the like. The foods can be used as a meal, snack, RTE cereal, pet food or pet treat. The processes described herein are more efficient and more adaptable than previous processes for filling crisp crusts. Previous processes for producing foods with these qualities relied on a two stage process: heating and filling; and the present invention accomplishes the goal by both heating and filling in the same step. Moreover, the processes and products herein are more adaptable to a variety of fat levels. textures, flavors, and other food attributes. The products retain a crisp exterior and lubricious filling for a surprising length of time, thereby providing additional functional benefits to both manufacturers and consumers. The invention provides tasty, healthy, enjoyable and convenient foods.

### Dough

Doughs useful in the present invention can be any type of edible sheetable or extrudable dough, including, for example, laminated or non-laminated cracker dough. cracker dough with some sweeteners added, cracker dough that is leavened, cracker dough that has been fermented, cracker dough with flavorings and/or cracker dough with inclusions or toppings. The dough can be yeast dough, straight dough, or sponge dough. Ideally, the dough is formulated so that it may be sheeted in an industrial sheeting machine.

Doughs useful in the present invention preferably include those selected from the group consisting of: soda cracker; multi-grain cracker; high fiber cracker; high protein cracker; wheat cracker; butter cracker; cheese-flavored cracker; graham cracker; and flatbread cracker.

Doughs useful in the present invention are made according to methods generally known in the art, and includes mixing flour, fat and moisture (ordinarily water) and most often, salt. Optional ingredients, such as sweeteners, flavors, inclusions, colors, nutritional supplements, leavening agents, sulfites, and dough conditioners, such as emulsifiers, reducing agents, and/or oxidizing agents may be added as well.

The present invention includes use of the same dough for the entire dough component in the food, but also includes combinations of doughs in a composition, for example two doughs each having a different type (color, flavor, inclusions, processing differences, etc.). Any particular dough itself may be a hybrid of dough types as well, so as to provide any functional or aesthetic result, provided that the purpose of the invention is not thwarted.

The flour component in any dough useful in the present invention may be any edible flour, including hard wheat flour, soft wheat flour, corn flour, rye flour, rice flour, barley flour, graham flour, whole wheat flour, high amylose flour, low amylose flour, and the like. Most preferably, the flour component is a blend of flour types, or a blend of flours and fibers. For instance, a combination of corn flour, wheat flour and fiber may be used as the flour component in the present invention. When using fiber in the flour component, those in the art appreciate the physical attributes of soluble and insoluble fibers, and may modify the blend according to the desired outcome.

Wheat flours are preferred, but other flours conventionally used in the preparation of baked goods are also employed in full or partial substitution for the wheat flour. One protein range for wheat flour used in the present invention is between about 7 to 15% by weight of the flour. In general, intermediate gluten levels are better suited to processing of cracker doughs, although those in the art arc aware of modifications necessary to achieve the same sheetability with other flours, either in combination with fibers or not.

The fat component in the doughs useful in the present invention may comprise any edible fat, oil, or shortening, including those that are solid at room temperature and those that are liquid at room temperature. Liquid shortenings or oils are usable and provide an advantage of ease or incorporation. Solid shortening is usable and provides an advantage of desirable mouthfeel upon consumption of the baked good. More commonly used are mixtures of liquid and solid shortenings. These mixtures are fluid or plastic depending, in part, on the level of solid fatty materials. Liquid shortening includes animal shortening, marine fats, vegetable or synthetic oil, such as sucrose polyesters, which are liquid at ordinary room temperature. The fat component of the present invention may comprise natural or hydrogenated oils, including soybean oil, cottonseed oil, canola (rapeseed) oil, peanut oil, safflower oil, sesame oil, sunflower oil, poppyseed oil, coconut oil, palm, oil, palm kernel oil, olive oil, butterfat, cocoa butter, tallow, lard, babassue, corn oil, or combinations thereof.

Sweeteners may optionally be added to a cracker dough useful in the present invention, but preferably at levels that do not interfere with the ability of the dough to form a sheet or be extruded. According to the invention, any suitable sweetener can be present, including liquid or dry sweeteners. Typical sweeteners include corn syrup, high fructose corn syrup, maltose, malt syrup, malt syrup solids, honey, maple syrup, rice syrup, rice syrup solids, sorghum syrup, refiners syrup, corn syrup solids, dextrose, fructose, crystalline fructose, galactose, glucose, lactose, sucrose, brown or invert sugars, molasses and other compositions that substantially comprise sugars, whether crystalline, syrup or other physical form, and combinations thereof. Preferably, the food items of the present invention comprise sucrose as the form of granulated sugar. Sugar substitutes can also be used according to the invention, including, for example, saccharine, acesulfane K. aspartame, sucralose, d-tagatose and the like. Such sugar substitutes can be used in addition to, or as a substitute for, any sweetener used.

Doughs useful in the present invention optionally further comprise emulsifiers. Generally useful emulsifier components are partially-esterified polyhydric compounds having surface active properties. This class of emulsifiers includes among others, mono- and di-glycerides of fatty acids, such as monopalmitin, manostearin, monoolein, and dipalmitin: partial fatty esters of glycols, such as propylene glycol monostearate and monobehenate; higher fatty acid esters of sugars, such as the partial palmitic and oleic acid esters of sucrose; and phosphoric and sulphuric acid esters, such as dodecylglyceryl ether sulfate and monostearin phosphate. Other examples include the partial esters of hydroxy carboxylic acid such as lactic, citric, and tartaric acids with polyhydric compounds, for example, glycerol lacto palmitate and the polyoxyethylene ethers of fatty esters of polyhydric alcohols, such as polyoxyethylene ether of sorbitan monostearate or distearate. Fatty acids alone or esterified with a hydroxy carboxylic acid, e.g., stearyl-2-lactylate are also useful. In certain variations, all or a portion of the emulsifier component is pre-blended with the shortening or fat component. However, in other variations, a portion of the emulsifiers can be pre-hydrated and added along with the other wet ingredients. In still other variations, the emulsifiers can be plated onto various solid carriers such as flour, starch, sugars, and the like, and admixed in with the various dry ingredients.

Doughs useful in the present invention also optimally comprise salt, for flavor and function. Any food-grade salt is acceptable, although those in the art are aware that certain salts lend themselves to better results than others. For instance, the salt may be chosen from, but is not limited to, sodium chloride, potassium chloride, calcium chloride, naturally-occurring sea or other salts, or combinations thereof.

Optionally, the doughs may comprise any leavening agent. The leavening agent may be any known in the art, and includes microbial, physical and chemical agents.

Microbial leavening agents include fermenting microorganisms, such as yeasts or bacteria, in conjunction with a food source for such microorganism, such as sugars. A yeast fermenting agent is preferred in the present invention.

Chemical leavening agents, such as those that are heat activated, or those that create gas via an acid/base system, or some variation of these, are the most industrially-efficient leavening means for use in the present invention. Heat activated leavening agents, such as ammonium bicarbonate, are the most simple to use, and optimally result in no residual salts.

An acid/base leavening system triggers a release of carbon dioxide upon contact with moisture. The evolution of carbon dioxide essentially follows the stoichiometry of typical acid-base reaction. The amount of basic leavening agent present determines the amount of carbon dioxide evolved, whereas the type of acidic leavening agent affects the speed at which the carbon dioxide is liberated. An excess amount of leavening base can impart a bitter flavor to the baked product while excess leavening acid can make the baked product tart. Water and salt are also products of these reactions, with the water dissipating as steam during baking and salt remaining in the food product. Ideally, any salt and/or moisture that remains in the food imparts a benefit to the end product.

Base leavening components suitable for use in the present invention include, for example, sodium bicarbonate and other bicarbonates and/or carbonates. Acid leavening components suitable for use in the present invention include, for example, sodium or calcium salts or ortho-, pyro-, and complex phosphoric acids in which at least two active hydrogen ions are attached to the molecule. Baking acids include monocalcium phosphate monohydrate (MCP), monocalcium phosphate anhydrous (AMCP), sodium acid pyrophosphate (SAPP), sodium aluminum phosphate (SALP), dicalcium phosphate dihydrate (DPD), dicalcium phosphate (DCP), sodium aluminum sulfate (SAS), glucono-deltalactone (GDL), potassium hydrogen tartrate (cream of tartar), and the like. In a preferred embodiment, the acidic leavening agent includes sodium aluminum phosphate, most preferably SAPP 28. One or more of the leavening agents may optionally be encapsulated, either the leavening base or the leavening acid, or both. A preferred leavening agent useful in the doughs of the present invention is a SAPP, particularly SAPP 28.

Optionally, the doughs useful in the present invention may comprise additional flavorant components, inclusions, and/or nutritive enhancers. Flavorants may be any of those known in the art and may include, cheese, cheese powder, yeasts, spices, paprika, garlic, herbs flavors, fruit flavors, chocolate, etc. Inclusions may be any of those known in the art and may include oats, nutmeats, seeds, candy pieces, fruit pieces, meat pieces, etc.

Nutritive enhancers may be any of those known in the art and may include, for example, vitamins, minerals, and fiber. Such nutritive enhancer can be selected from the group consisting of: soluble fiber; insoluble fiber; fructo-oligosaccharides; inulins; psyllium husk fiber; citrus fiber; oat fiber; microground fiber; vegetable gums; dextrins; resistant starches; grain brans; oat brans; wheat brans; corn brans; cactus extracts; beta carotene; quinoa; whey protein extracts; omega fatty acids; spirulinas; brown scaweeds; probiotics, prebiotics; ginko bilboa; flax seed; flax seed oil:
saw palmetto; grape seed extract; milk thistle; bilberry; green tea; *Echinacea*; cohosh;
cayenne; saponins; antioxidants; ginsing; wild yam extract; yohimbe; noni; algae; fruit vinegar; fruit concentrate; mangosteen; acai; goji; pomegranate; wheat grass; chlorella;
sterols; wheat grass; alfalfa; barley grass; phytonutrients; beet fiber; oat fiber; apple pectin; black current fiber; flavones; isoflavones; soy; evening primrose oil; essential fatty acids; eicosapentanoid acid; docosahaenoic acid; bee pollen; royal jelly; creatine;
caffeine; zinc; vitamins; minerals; aloe; *Hoodia*; conjugated linoleic acid; *Caralluma fibriata*; and olive oil.

Any fibers are useful to boost the digestive health benefits of the present invention, however. Fiber can be added to the dough of the present invention, or to the filling of the present invention. Useful dietary fiber includes both soluble and insoluble fiber, as well as sources generally known to contribute insoluble fiber, such as soy fiber, apple fiber, corn bran, wheat bran, wheat fiber, cocoa fiber, bamboo fiber, oat bran, barley bran, rye bran, triticale bran, cellulose, pea fiber, sugar beet fiber, and peanut fiber. Sources generally known to contribute soluble fiber include but are not limited to fructo-oligo saccharides, inulin, gum arabic, gum ghatti, guar gumpectins, psyllium, carrageenans, xanthan, tragacanth, karaya, locust bean gum, agar, and alginates. Other fibers include polysaccharides, such as polydextrose and other complex sugar polymers or prebiotic fibers. When fiber is used it may substitute for flour and, preferably replaces 0-100% of the flour preferably 50-75%, most preferably 40-60%.

When such additions are added to the doughs useful in the present invention, the physical and chemical features of the addition ideally does not interfere with the ability of the dough to form a sheet or be extruded.

Doughs of the present invention may also optionally comprise enzymes, according to criteria and processes known to those in the art. For instance, proteases, lipases, carbohydrases may optionally be added, to modify the structure, function or flavor of the end product.

Preferred food products are those made from flavored cracker dough. More preferred are those food products made from a dough flavor selected from the group consisting of: buttery flavor; multi-grain flavor; cheddar flavor; chocolate flavor; wheat flavor; cinnamon flavor; onion flavor; fish flavor; pretzel flavor; garlic flavor; parmesan flavor; graham flavor; sesame flavor; corn flavor; legume flavor; beef flavor; chicken flavor; lamb flavor; shrimp flavor; nacho seasoning flavor; potato flavor; green chile flavor; ranch salad dressing flavor; tomato flavor; apple flavor; mint flavor: rosemary flavor; mixed fruit flavor; mixed vegetable flavor; mixed meat flavor; mixed spice flavor; and mixed herb flavor.

Also preferred are those food products which comprises a seasoning on at least one surface. In one embodiment, oil is applied to at least one surface of the baked product, and seasoning is applied. In another embodiment, a starch slurry is applied to at least one surface of the baked product, seasoning is applied, and dried.

However, other toppings, such as bran flakes or other particles are suitable for the present invention, and may be adhered to the surface using the inventive method disclosed in co-pending application serial number 12/178,261. The surface of the dough can also be pretzelizcd, as is disclosed in co-pending application serial number 12/170,729. Any patents that issue from those applications shall be incorporated by reference into the present application.

The following table provides general guidelines as to the doughs useful in the present invention.

**TABLE I Cracker dough**

| INGREDIENT | Preferred % by total weight | More Preferred % by total weight | Most Preferred % by total weight |
|---|---|---|---|
| Flour component | 40-80 | 40-70 | 55-65 |
| Fat | 0-15 | 5-10 | 6-8 |
| Moisture | 10-35 | 20-30 | 25-29 |
| Salt | 0-1 | 0.4-1 | 0.6-0.8 |
| Optional ingredients | 0-10 | 0-8 | 0-5 |
| Total | 100.00 | 100.00 | 100.00 |

### Filling

Prior to baking, the filling in the present invention is a powder. The powder is necessarily more hygroscopic than the dough with which it is in contact. The powder also has the feature of flowing when heated at the temperature and time needed to crisp the dough to an acceptable moisture level and browning. The food powder preferably comprises a plurality of food components, including at least one hygroscopic component; at least one flavor component; at least one solids component; and at least one fat component. Most preferred are those unbaked food products wherein the hygroscopic component is selected from the group consisting of: crystalline fructose; a sugar alcohol; salts; a protein source; dry whey, sweet whey, whey protein isolate, or any combination of thereof.

In embodiments wherein the hygroscopic component is crystalline fructose, the flavor component is preferably fruit powder, the solids component is preferably a starch thickening agent, and the fat is preferably a liquid oil.

In embodiments wherein the hygroscopic component and solids component is whey, the flavor component is more preferably a cheese powder, and the fat is preferably liquid oil.

The powder useful in the present invention includes at least one hygroscopic component. Preferably, the powdered layer comprises crystalline fructose and/or whey proteins, as surprisingly good hygroscopic agents when placed near a dough, under baking conditions. The powdered layer preferably comprises granular, powdered, desiccated or otherwise very low moisture food-grade ingredients. Preferably, the powdered layer comprises a sugar, salt or a polypeptide, more preferably a simple sugar, a sugar alcohol or a low molecular weight protein. The powdered layer may also include a humectant such as glycerin for moisture retention. Other examples of humectants that could be used include sorbitol, a mixture of glycerin and sorbitol, propylene glycol, or combinations thereof.

The food powder comprises from about 40 to 95% hygroscopic component. Preferably, the food powder comprises 60 to 85% hygroscopic component, most preferably 80 to 85%.

The powder used in the present invention can be sweet or savory, or some combination thereof. Sweet layers are those wherein the primary ingredients are sugars, or ingredients containing sugars, such as fruit, and could additionally contain sugar-complementing herbs and/or spices, such as mint, cinnamon or nutmeg. Savory layers would be wherein the primary ingredients are meat, cheese, fish or other "umami" ingredients and would include those layers wherein herbs or spices contribute significantly to the flavor profile, such as garlic or pepper. Combination layers would be those wherein the sugar ingredients and the savory ingredients mingle, such as fruit curries or mincemeat. Preferably, the powdered layer is a fruit-flavored filling or a cheese-flavored filling.

The food powder useful in the present invention may include any flavor components that do not significantly interfere with the function of the hygroscopic component. Preferably, the flavor component comprises dry, granular desiccated, powdered or otherwise very low moisture fruit, cheese, meat, including fish, herbs, spices, artificial or natural flavors, or some combination thereof.

Examples of fruit flavor components also include pineapples, lemons, oranges, preaches, pears, grapes, mangos, apples, tomatoes, bananas, plums, blueberries, raspberries, strawberries, blackberries, currents, cherries, and mixtures thereof. Preferred fruits are selected from the group consisting of strawberries, pineapple, cherries, blueberries, raspberries, and mixtures thereof. Such fruit flavor qualities may be from fruit powder, drum-dried fruit solids, freeze-dried fruit solids, or evaporated fruit puree. Compositions comprising fruit may include a food grade acid such as citric acid for modifying the pH of the admixture, as is known in the art. Food grade acids that could be used include citric acid, malic acid, tartaric acid, ascorbic acid, phosphoric acid, lactic acid, acetic acid, adipic acid, glucono delta lactone acid, fumaric acid, succinic acid, tarenic acid, or combinations thereof.

Examples of cheese flavor components include cheddar, Colby, Swiss, American, mozzarella, Monterrey jack, parmesan, provolone, blue cheese, brie, herbed, spiced or vegetable-containing cheeses, artificial cheeses, natural cheeses, or combinations thereof. Any cheese or other flavor component is acceptable, however.

The food powder comprises from about 5 to 20% flavor component. Preferably, the food powder comprises 7 to 15% flavor component, most preferably 8 to 12%.

The solids component of the food powder of the present invention ideally encourages viscosity in the layer when moisture is released from the dough during baking. Examples of solids that would be useful are whey, whey protein isolate, cracker meal, starches, including pre-gelatinized starches, maltodextrins, gums, proteins, protein isolates, fibers, combinations of these, or other compositions that will retain water and create a lubricious/creamy mouth feel, and not significantly interfere with the hygroscopic component.

The food powder comprises from about 1 to 30% solids component. Preferably, the food powder comprises 1 to 20% solids component, most preferably 1 to 15%.

The fat component of the present food powder ideally discourages dust aerosolization from the powdered layer. Examples of fats that would be useful are fats that are liquid at room temperature, or melted fats that are solid at room temperature. For instance, natural or hydrogenated fats such as soybean oil, cottonseed oil, canola (rapeseed) oil, peanut oil, safflower oil, sesame oil, sunflower oil, poppy seed oil, coconut oil, palm oil, palm kernel oil, olive oil, butterfat, cocoa butter, tallow, lard, babassue, corn oil, or combinations thereof are appropriate.

The food powder comprises from about 0 to 5% fat component. Preferably, the food powder comprises 0 to 3% fat component, most preferably 0 to 2%.

The food powder may also comprise additional components, such as colorants, vitamins, minerals, or fibers.

The food powder preferably has a moisture content of 3 to 15% before baking. After baking and some minor equilibration, the moisture content of the filling remains essentially unchanged during the first several months, with the first month showing less than 10% change in moisture loss/gain in the filling/cracker.

**TABLE II Food Powder**

| INGREDIENT | Preferred %Dry wt. | More Preferred %Dry wt. | Most Preferred %Dry wt. |
|---|---|---|---|
| Hygroscopic component | 40-95 | 60-85 | 80-85 |
| Flavor Component | 5-20 | 7-15 | 8-12 |
| Solids Component | 1-30 | 1-20 | 1-15 |
| Oil Component | 0-5 | 0-3 | 0-2 |
| Colorant | 0-3 | 0-1 | .02-.05 |
| Total | 100.00 | 100.00 | 100.00 |

### Producing intermediates

The present invention necessarily involves forming dough so as to enclose powdered filling. The sheets of dough may be formed in any manner, such as sheeting or extruding. Sheets may be layered with powdered filling between the layers, or extruded with powdered filling within a cavity in the extruded dough. The filling need not be fully enclosed by the dough; it is adequate to have enough contact such that the steam released during baking is absorbed into the powder, and the resulting viscous filling is held in place by the crisped crust.

The most industrially-efficient means for accomplishing a sheet of dough is to place prepared dough in a hopper that feeds the dough through rollers, or, ideally, a series of rollers, so as to reduce the dough from one large mass to a sheet of desired thickness. These techniques are known in the art, and adjusting the thickness of the dough so as to result in the physical attributes desired are also within the skill of the art. Sheeting may be accomplished manually as well, although such a process is ordinarily done a small scale. Large scale dough sheeting may be accomplished via vertical or horizontal sheeting apparati, and may include traditional lamination during the sheeting process, or not. The doughs may be made to have dual or multi-colors or flavors in any given sheet. Layering may also be accomplished via large scale multi-hopper sheeting mechanisms or any other techniques that result in the appropriate configuration as described herein. Multiple layers of dough are within the scope of the present invention. Lamination and layering may be accomplished according to any method that results in the appropriate configuration described herein.

The present invention preferably comprises sheets that are 8 millimeters or less in thickness, more preferably 1 to 5 millimeters, most preferably approximately 2 to 4 millimeters thick.

The present invention also preferably comprises laminated dough sheets, more preferably between 3 and 12 laminations, most preferably between 5 and 9 laminations.

The thickness of the filling layer can be very thin, so as to provide a slight hint of the filling, or very thick, so as to make a sandwich appearance. Preferably, the dry filling is 0.1 inches to 0.8 inches, more preferably 0.3 to 0.5 inches, most preferably about 0.4 inches thick. When moisture is absorbed into the dry filling layer, the Filling expands by approximately 20-50%, although different ingredients expand differently.

Preferably, the moisture content of the intermediate food items (unheated dough with powder inside) is less than 15%, more preferably less than 10%, most preferably less than 8% prior to baking, frying or otherwise reducing the moisture content and crisping the dough. After such treatment, the crisp, filled food products have a moisture content m the range from 1-4%, preferably 2-3%.

### Transforming Intermediate to Finished Product

The unheated dough-powdered filling intermediates may be any shape that can be cut from sheeted or extruded dough, and can have any design features that do not interfere with the underlying functional attributes. A preferred shape of the present invention is a bite-sized rectangle having crimped edges, having approximate dimensions of 1.25 inches by 0.7 inches in length and 0.6 inches in height. However, the food products of the present invention may be animal-shaped, character-shaped, star shaped, rope-shaped, stick shaped, braided, etc. Preferred are those shapes which can be tessellated, extruded, or those which otherwise result in little or no dough waste.

The dough with entrapped powder may be baked, fried or otherwise heated so as to result in a crisp exterior and lubricious interior filling. Baking can be accomplished at temperatures ranging from 325°F to 750°F, with times ranging from 2 to 10 minutes, depending on the temperature. Preferred are temperatures from 400°F to 600°F. Such modifications are within skill of the art. Frying can be accomplished in any manner known in the art to accomplish the same goals.

While not wishing to be bound to any particular theory, the surprising result may be explained that, by using these compositions and processes, the steam released during baking or frying is harnessed to provide an advantage in processing. Prior to the present invention, the inherent moisture release from dough during baking or frying was thought to be an obstacle. The present invention reverses that thinking, and turns the obstacle into a benefit.

The present invention provides a method of making a ready-to-eat, filled crisp cracker, comprising: trapping a food powder within dough, wherein the powder is more hygroscopic than the dough, and heating the powder and dough so as to preferentially transfer and retain moisture in the powder. The total water activity of the ready-to-eat crisp filled foods made by this process is approximately 0.2 to 0.65, preferably approximately 0.4 to 0.55.

The invention described herein is a significant improvement over the products previously known, and the processing methods previously known. The present invention is an elegantly simple process, and results in a superior food product. In the most preferred embodiment, exemplified below, dry food powder is sprinkled onto a first dough sheet, and subsequently trapped by a second dough sheet. The resulting unbaked, layered intermediate is subsequently baked. During the baking process, the powdered layer becomes creamy and lubricious, and the crackers become crisp and brown. Remarkably, the baked end product retains superior physical properties for months. The crackers stay crisp and do not reabsorb moisture from the filling. The filling stays creamy and lubricious, and does not become brittle. The entire process allows for greater product definition flexibility, including lower-fat formulations, broader consumer appeal, and cost savings.

### Examples

**Example 1.** Preparation of a fruit-flavored food powder of the present invention.

| FOOD POWDER INGREDIENTS | % BY WEIGHT |
|---|---|
| raspberry powder | 10.00 |
| citric acid, powdered | 0.40 |
| thickening starch, powdered | 4.00 |
| food coloring, powdered | 0.03 |
| crystalline fructose, dry | 79.57 |
| corn syrup solids, dry | 6.00 |
| sunflower oil | 0.20 |
| Total | 100.00 |

The ingredients were combined, in the amounts above, except for the oil. After all but the oil was combined, the oil was blended with the other ingredients. Some batches were compressed into tablet form.

**Example 2.** Preparation of a cheese-flavored food powder of the present invention

| FOOD POWDER INGREDIENTS | % BY WEIGHT |
|---|---|
| cheese flavorant, powdered | 41.00 |
| sweet dry whey | 41.00 |
| sunflower oil | 10.00 |
| water | 5.00 |
| emulsifier | 1.00 |
| disodium phosphate | 2.00 |
| TOTAL | 100.00 |

Emulsifier was mixed with sunflower oil and set aside. Other ingredients were mixed together using a mixer from Hobart^{®}. First, the cheese flavorant powder was placed in the bowl and the mixer turned on. While mixing, the remaining ingredients, including the emulsifier and sunflower oil were added slowly as a whole.

**Example 3.** Preparation of a chocolate-flavored food powder of the present invention.

| FOOD POWDER INGREDIENTS | % BY WEIGHT |
|---|---|
| vanilla flavor | 0.10 |
| chocolate flavor | 0.30 |
| flour salt | 0.30 |
| black cocoa, powdered | 1.00 |
| red dutched cocoa, powdered | 4.50 |
| thickening starch, powdered | 3.00 |
| corn syrup solids, dry | 6.00 |
| crystalline fructose, dry | 84.60 |
| sunflower oil | 0.20 |
| Total | 100.00 |

The ingredients were combined, in the amounts above, except for the oil. After all but the oil was combined, the oil was blended with the other ingredients. Some batches were compressed into tablet form.

**Example 4.** Preparation of a cheese-flavored intermediate food product of the present invention.

| **CHEESE-FLAVORED** | **% BY WEIGHT** |
|---|---|
| **CRACKER DOUGH INGREDIENTS** | |
| soybean oil | 3.99 |
| sour dough flavorant powder | 5.16 |
| white cheddar cheese powder | 2.58 |
| water | 25.18 |
| cheese powder | 3.52 |
| cheese enhancer | 0.77 |
| granulated salt | 0.70 |
| ground paprika | 0.61 |
| garlic powder | 0.01 |
| wheat flour | 57.47 |
| TOTAL | 100.00 |

All ingredients shown above, except flour, were placed into a Hobart^{®} mixer and mixed for three minutes on low. The flour was added to the mixer and mixed for four minutes on low, and then two minutes on high. The dough was allowed to rest for 30 minutes. The dough was divided into two pieces and sheeted using a Rondo^{®} sheeter to 0.75 - 1.00 with two book folds.

The dough was sprinkled with the food powder of Example 2, so as to result in a relatively even layer that covered the dough. The dough was folded over the powdered layer so as to touch the powder and sandwich the powder between dough sheets. The sheets were sealed and dockered with a fork.

**Example 5.** Preparation of a fruit-flavored and chocolate intermediate food product of the present invention.

| **PLAIN-FLAVORED** | **% BY WEIGHT** |
|---|---|
| **CRACKER DOUGH INGREDIENTS** | |
| sugar | 3.50 |
| high fructose corn syrup | 3.50 |
| palm shortening | 8.60 |
| hot water | 14.50 |
| SAPP 28 | 0.30 |
| baking soda | 0.50 |
| protease | 0.04 |
| amylase | 0.01 |
| emulsifier | 0.20 |
| modified starch | 4.00 |
| cracker flour | 48.40 |
| flax seed meal | 3.00 |
| butter crème flavor | 0.20 |
| topping salt | 0.70 |
| spray oil | 12.55 |
| TOTAL | 100.00 |

The first five ingredients were blended. The remaining ingredients, except for the last two, were blended together and placed in a mixer. The liquid was added to the mixer and mixed for four minutes on low, and then two minutes on high. The dough was allowed to rest for 30 minutes. The dough was divided into two pieces and sheeted using a Rondo^{®} sheeter to 0.75 - 1.00 with two book folds.

One portion of the dough was sprinkled with the food powder of Example 1, so as to result in a relatively even layer that covered the dough. Another portion of the dough was sprinkled with the food powder of Example 3, so as to result in a relatively even layer that covered the dough.

The dough was folded over the food powder so as to touch the powder and sandwich the powder between dough sheets. The sheets were sealed and dockered with a fork. The last two ingredients were applied by spraying the top dough surface with oil and sprinkling with salt.

**Example 6.** Preparation of a ready-to-eat food product of the present invention.

Intermediates of Example 4 and 5 were baked in two stages. They were placed on a mesh belt and baked 400°F for four to five minutes and then in a second stage at 200°F on lower for eight minutes. The baked foods were cooled and upon inspection, the exterior remained crisp and the interior filling remained lubricious and creamy, not only on the first day, but also for 60 days when packaged and stored at commercial conditions.

The foregoing invention has been described in accordance with the relevant legal standards, thus the description is exemplary rather than limiting in nature. Variations and modifications to the disclosed embodiment may become apparent to those skilled in the art and do come within the scope of the invention. Accordingly, the scope of legal protection afforded this invention can only be determined by studying the following claims.

## Claims

1. A ready-to-eat, filled food, comprising: crisp crust having a lubricious, wherein said filling comprises 20-50% whey solids and 10 to 25% cheese powder.

2. A method to make a ready-to-eat, filled food, comprising: heating a dough that at least partially encloses a filling consisting of dry powdered ingredients, the heating being sufficient so as to crisp the dough and to release steam from the dough into the filling thereby transforming the dry powdered ingredients into a lubricious filling, wherein the powdered ingredients comprise 20-50% powdered whey solids and 10 to 25% by weight cheese powder.

3. A product made according to the process of claim 2.

4. The method of claim 2 wherein the filling expands by 20 to 50% as it absorbs the steam from the dough during heating and is transformed into a lubricious filling.
